# EUROPEAN PATENT APPLICATION

(11) **EP 4 676 159 A1**
(43) Date of publication of application: **07.01.2026**
(21) Application number: 24774006.1
(22) Date of filing: 14.03.2024
(51) Int. Cl.: H04W 76/12

(54) **COMMUNICATION METHOD AND APPARATUS**

(30) Priority: 20.03.2023 CN 202310303879; 18.05.2023 CN 202310566365
(71) Applicant: Huawei Technologies Co., Ltd., Shenzhen, Guangdong 518129 (CN)
(72) Inventor: LONG, Sirui, Shenzhen, Guangdong 518129 (CN); YOU, Zhenggang, Shenzhen, Guangdong 518129 (CN); LYU, Liming, Shenzhen, Guangdong 518129 (CN)
(74) Representative: Thun, Clemens
(86) International application number: PCT/CN2024/081769
(87) International publication number: WO 2024/193440

(57) **Abstract**

This application relates to the field of communication technologies, and in particular, to a communication method and apparatus, to create a session via an SMF network element at a visited location (or a roaming location) based on an identifier of a dedicated data network, so that a terminal device user can access both a public data network and the dedicated data network. The method includes: A first SMF network element receives first information from a PCF network element, where the first information includes an identifier of a first dedicated data network to which a terminal device subscribes; the first SMF network element sends a first request including the identifier of the first dedicated data network to a second SMF network element that supports the first dedicated data network; the first SMF network element receives, from the second SMF network element, a first response including second tunnel information of a second UPF network element, where the second UPF network element is a UPF network element selected based on the first dedicated data network; and the first SMF network element sends second information to a first UPF network element, where the second information includes the second tunnel information and a first traffic steering rule.

## Description

### CROSS-REFERENCE TO RELATED APPLICATIONS

This application claims priority to Chinese Patent Application No. 202310303879.6, filed with the China National Intellectual Property Administration on March 20, 2023 and entitled "COMMUNICATION METHOD AND APPARATUS", which is incorporated herein by reference in its entirety. This application claims priority to Chinese Patent Application No. 202310566365.X, filed with the China National Intellectual Property Administration on May 18, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Currently, communication systems such as the 4th generation (4th generation, 4G) communication system and the 5th generation (5th generation, 5G) communication system support a user plane function (user plane function, UPF) network element having a function of an uplink classifier (uplink classifier, ULCL) in steering packets of a user to different session anchors (for example, packet data unit (packet data unit, PDU) session anchors), so that the user can access different data networks at the same time. For example, the user can access both a dedicated data network of an enterprise or the like and a public data network like the internet (internet).

However, a traffic steering rule of a packet for the dedicated data network is usually preconfigured or defined on a session management function (session management function, SMF) network element or a UPF network element at a location of the dedicated data network. In this case, there is a problem that the user cannot continue to access the dedicated data network when leaving the location of the dedicated data network.

### SUMMARY

Embodiments of this application provide a communication method and apparatus, to create a session via an SMF network element at a visited location (or a roaming location) based on an identifier of a dedicated data network, so that a terminal device user can access both a public data network and the dedicated data network. In addition, traffic of the public data network is offloaded at the visited location (or the roaming location), to avoid traffic circumambulation.

According to a first aspect, an embodiment of this application provides a communication method. The method includes: A first session management network element receives first information from a policy control network element, where the first information includes an identifier of a first dedicated data network to which a terminal device subscribes, and the first session management network element is a session management network element at a visited location of the terminal device; the first session management network element sends a first request to a second session management network element, where the first request includes the identifier of the first dedicated data network, and the second session management network element is a session management network element that supports the first dedicated data network; the first session management network element receives a first response from the second session management network element, where the first response includes second tunnel information of a second user plane function network element, and the second user plane function network element is a user plane function network element selected by the second session management network element based on the first dedicated data network; and the first session management network element sends second information to a first user plane function network element, where the second information includes the second tunnel information and a first traffic steering rule, the first traffic steering rule indicates the first user plane function network element to send, to the second user plane function network element, a packet that is for the first dedicated data network and that is sent by the terminal device, and the first user plane function network element is a user plane function network element selected for a general data network to which the terminal device subscribes. Optionally, the method further includes: The first session management network element obtains, via a network repository function network element, information about the second session management network element that supports the first dedicated data network.

According to the foregoing method, in a scenario like cross-province/cross-city roaming of a terminal device user, a session management network element at a roaming location (or a visited location) may create a session based on an identifier of a dedicated data network, so that the terminal device user can access both a public data network and the dedicated data network. In addition, traffic of the public data network may still be sent by a user plane function network element at the visited location to the public data network, and is offloaded at the roaming location (namely, the visited location), to avoid traffic circumambulation.

In a possible design, the first information further includes an internet protocol (internet protocol, IP) address list and/or a domain name list that correspond/corresponds to the first dedicated data network; and the first traffic steering rule includes the IP address list and/or the domain name list.

According to the foregoing design, a dynamic traffic steering rule and the like delivered by the policy control function network element may be extended to carry information like a domain name corresponding to a dedicated data network, so that the user plane function network element can steer a packet (or traffic) based on the domain name. In addition, a predefined traffic steering rule of a home location is not configured in the session management network element at the roaming location (or the visited location).

In a possible design, the first request further includes first tunnel information of the first user plane function network element.

The foregoing design helps establish a downlink tunnel from the second user plane function network element selected for the first dedicated data network to the first user plane function network element, and facilitates transmission of a downlink packet of the first dedicated data network to the terminal device.

In a possible design, the first request further includes an IP address of the terminal device.

The foregoing design helps the second user plane function network element selected for the first dedicated data network learn of the IP address of the terminal device, and associate the IP address of the terminal device with a dedicated IP address of the terminal device on the first dedicated data network, to perform address translation on a packet transmitted between the first dedicated data network and the terminal device.

In a possible design, the method further includes: When the terminal device is located in a service area of the second user plane function network element, the first session management network element sends fourth information to the second user plane function network element, where the fourth information includes the first tunnel information of the first user plane function network element and a second traffic steering rule, and the second traffic steering rule indicates the second user plane function network element to send, to the first user plane function network element, a packet that is not for the first dedicated data network and that is sent by the terminal device. Before the first session management network element sends the second information to the first user plane function network element, the method further includes: The first session management network element determines that the terminal device moves out of the service area of the second user plane function network element. Optionally, the second traffic steering rule includes the IP address list and/or the domain name list that correspond/corresponds to the first dedicated data network.

According to the foregoing design, when the terminal device user moves inside and outside a campus, a traffic steering rule can be migrated, thereby improving user experience.

In a possible design, the method further includes: The first session management network element sends the first tunnel information of the first user plane function network element and a third traffic steering rule to a third user plane function network element, where the third traffic steering rule indicates the third user plane function network element to send, to the first user plane function network element, a packet that is not for a second dedicated data network and that is sent by the terminal device, and the third user plane function network element is a user plane function network element selected by the first session management network element based on the second dedicated data network. Optionally, the third traffic steering rule includes an IP address list and/or a domain name list that correspond/corresponds to the second dedicated data network.

According to the foregoing design, a scenario in which a dedicated data network at the visited location (or the roaming location) and a dedicated data network at a home location are overlaid can be supported, to implement two-stage steering of a packet.

In a possible design, when the terminal device performs access at the visited location (or roaming location) over 4G (for example, accesses a public land mobile network (public land mobile network, PLMN) at the visited location over a 4G network), the first session management function network element is a session management and packet data network gateway control plane function converged network element at the visited location, and the first user plane function network element is a user plane function and packet data network gateway data plane function converged network element at the visited location.

The session management and packet data network gateway control plane function converged network element may be a device or a network element that converges a session management function (session management function, SMF) network element in a 5G network and a packet data network gateway (packet data network gateway, PGW)-control plane function (control plane function, C) in a 4G network, which may be referred to as an SMF&PGW-C network element. The user plane function and packet data network gateway data plane function converged network element may be a device or a network element that integrates a user plane function (user plane function, UPF) network element in the 5G network and a PGW-user plane function (user plane function, U) in the 4G network, which may be referred to as a UPF&PGW-U network element.

In addition, it may be understood that the first session management function network element may be not only an SMF&PGW-C network element, but also an SMF&PGW network element, or an SMF&PGW-C&PGW-U network element. In other words, when the terminal device performs access at the visited location over 4G, the first session management function network element can not only have a function of an SMF network element and a function of a PGW-C, but also have a function of a PGW-U. That the first session management function network element is the SMF&PGW-C network element is merely an example, and does not constitute a limitation on this application.

Similarly, the first user plane function network element may be not only a UPF&PGW-U network element, but also a UPF&PGW network element, or a UPF&PGW-C&PGW-U network element. In other words, when the terminal device performs access at the visited location over 4G, the first user plane function network element can not only have a function of a UPF network element and a function of a PGW-U in the 5G network, but also have a function of a PGW-C. That the first user plane function network element is the UPF&PGW-U network element is merely an example, and does not constitute a limitation on this application.

According to the foregoing design, in a scenario like cross-province/cross-city roaming, when the terminal device user performs access at a roaming location (or a visited location) over 4G, an SMF&PGW-C network element at the roaming location (or the visited location) may create a session based on an identifier of a dedicated data network, so that the terminal device user can access both a public data network and the dedicated data network. In addition, traffic of the public data network may still be sent by a user plane function network element at the visited location to the public data network, and is offloaded at the roaming location (namely, the visited location), to avoid traffic circumambulation.

According to a second aspect, an embodiment of this application provides a communication method. The method includes: A first user plane function network element receives second tunnel information and a first traffic steering rule from a first session management network element, where the first session management network element is a session management network element at a visited location of a terminal device, the first user plane function network element is a user plane function network element selected for a general data network to which the terminal device subscribes, the second tunnel information is tunnel information of a second user plane function network element selected for a first dedicated data network to which the terminal device subscribes, and the first traffic steering rule indicates to send, to the second user plane function network element, a packet that is for the first dedicated data network and that is sent by the terminal device; and the first user plane function network element establishes an uplink tunnel to the second user plane function network element based on the second tunnel information, where the uplink tunnel is used to transmit a packet sent by the first user plane function network element to the second user plane function network element.

In a possible design, the first traffic steering rule includes an IP address list and/or a domain name list that correspond/corresponds to the first dedicated data network.

In a possible design, when the first traffic steering rule includes the domain name list corresponding to the first dedicated data network, the method further includes: The first user plane function network element sends a first packet from the terminal device to the second user plane function network element through the uplink tunnel, where a first domain name carried in the first packet belongs to the domain name list; the first user plane function network element receives a second packet from the second user plane function network element, where the second packet is a response packet for the first packet; and the first user plane function network element associates a source IP address of the second packet with the first domain name.

In a possible design, the method further includes: The first user plane function network element sends a third packet to the second user plane function network element, where the third packet includes an IP address of the terminal device.

In a possible design, when the terminal device performs access at the visited location (or roaming location) over 4G (for example, accesses a PLMN at the visited location over a 4G network), the first session management function network element is a session management and packet data network gateway control plane function converged network element at the visited location, and the first user plane function network element is a user plane function and packet data network gateway data plane function converged network element at the visited location.

In a possible design, the method further includes: The first user plane function network element performs 4G and 5G packet format conversion on a packet transmitted between the first dedicated data network and the terminal device.

According to the foregoing design, the terminal device can communicate with a 5G dedicated data network at a home location when performing access at the visited location (or the roaming location) over 4G.

According to a third aspect, an embodiment of this application provides a communication method. The method includes: A second session management network element receives a first request from a first session management network element, where the first request includes an identifier of a first dedicated data network to which a terminal device subscribes, the first session management network element is a session management network element at a visited location of the terminal device, and the second session management network element is a session management network element that supports the first dedicated data network; and the second session management network element sends a first response to the first session management network element, where the first response includes second tunnel information of a second user plane function network element, and the second user plane function network element is a user plane function network element selected by the second session management network element based on the first dedicated data network.

In a possible design, the first request further includes first tunnel information of a first user plane function network element; and the method further includes: The second session management network element sends third information to the second user plane function network element, where the third information includes the first tunnel information.

In a possible design, the first request further includes an IP address of the terminal device, and the third information further includes the IP address of the terminal device.

In a possible design, the third information further includes a dedicated IP address of the terminal device in the first dedicated data network.

In a possible design, the method further includes: The second session management network element obtains the dedicated IP address from a user data management network element, or obtains the dedicated IP address from a server corresponding to the first dedicated data network, for example, an authentication, authorization, and accounting (authentication, authorization, accounting, AAA) server.

According to a fourth aspect, an embodiment of this application provides a communication method. The method includes: A second user plane function network element receives a third packet from a first user plane function network element, where the third packet includes an IP address of a terminal device, the first user plane function network element is a user plane function network element selected for a general data network to which the terminal device subscribes, and the second user plane function network element is a user plane function network element selected for a first dedicated data network to which the terminal device subscribes; and the second user plane function network element associates the IP address of the terminal device with a dedicated IP address of the terminal device in the first dedicated data network, where an association relationship between the IP address of the terminal device and the dedicated IP address is used to perform address translation on a packet transmitted between the first dedicated data network and the terminal device.

In a possible design, the method further includes: The second user plane function network element receives third information from a second session management network element, where the third information includes first tunnel information, the first tunnel identifier is a tunnel identifier of the first user plane function network element, and the second session management network element is a session management network element that supports the first dedicated data network; and the second user plane function network element establishes a downlink tunnel to the first user plane function network element based on the first tunnel information, where the downlink tunnel is used to transmit a packet sent by the second user plane function network element to the first user plane function network element.

In a possible design, the third information further includes the dedicated IP address of the terminal device in the first dedicated data network.

According to a fifth aspect, an embodiment of this application provides a communication method. The method includes: A second user plane function network element receives third information from a second session management network element, where the third information includes first tunnel information and an IP address of a terminal device, the first tunnel identifier is a tunnel identifier of a first user plane function network element, the first user plane function network element is a user plane function network element selected for a general data network to which the terminal device subscribes, the second user plane function network element is a user plane function network element selected for a first dedicated data network to which the terminal device subscribes, and the second session management network element is a session management network element that supports the first dedicated data network; and the second user plane function network element establishes a downlink tunnel to the first user plane function network element based on the first tunnel information, where the downlink tunnel is used to transmit a packet sent by the second user plane function network element to the first user plane function network element; and the second user plane function network element associates the IP address of the terminal device with a dedicated IP address of the terminal device in the first dedicated data network, where an association relationship between the IP address of the terminal device and the dedicated IP address is used to perform address translation on a packet transmitted between the first dedicated data network and the terminal device.

In a possible design, the third information further includes the dedicated IP address of the terminal device in the first dedicated data network.

According to a sixth aspect, an embodiment of this application provides a communication apparatus. The communication apparatus may be used in a communication apparatus in the first aspect. The communication apparatus may be a first session management network element, a component (for example, a processor, a chip, or a chip system) of the first session management network element, an apparatus that is used in a manner of being matched with the first session management network element, or the like.

In a possible implementation, the communication apparatus may include modules or units that one-to-one correspond to the methods/operations/steps/actions described in the first aspect, for example, a processing unit and an interface unit. The module or the unit may be a hardware circuit, may be software, or may be implemented by the hardware circuit in combination with the software.

According to a seventh aspect, an embodiment of this application provides a communication apparatus. The communication apparatus may be used in a communication apparatus in the second aspect. The communication apparatus may be a first user plane function network element, a component (for example, a processor, a chip, or a chip system) of the first user plane function, an apparatus that is used in a manner of being matched with the first user plane function, or the like.

In a possible implementation, the communication apparatus may include modules or units that one-to-one correspond to the methods/operations/steps/actions described in the second aspect, for example, a processing unit and an interface unit. The module or the unit may be a hardware circuit, may be software, or may be implemented by the hardware circuit in combination with the software.

According to an eighth aspect, an embodiment of this application provides a communication apparatus. The communication apparatus may be used in a communication apparatus in the third aspect. The communication apparatus may be a second session management network element, a component (for example, a processor, a chip, or a chip system) of the second session management network element, an apparatus that is used in a manner of being matched with the second session management network element, or the like.

In a possible implementation, the communication apparatus may include modules or units that one-to-one correspond to the methods/operations/steps/actions described in the third aspect, for example, a processing unit and an interface unit. The module or the unit may be a hardware circuit, may be software, or may be implemented by the hardware circuit in combination with the software.

According to a ninth aspect, an embodiment of this application provides a communication apparatus. The communication apparatus may be used in a communication apparatus in the fourth aspect or the fifth aspect. The communication apparatus may be a second user plane function network element, a component (for example, a processor, a chip, or a chip system) of a second user plane function, an apparatus that is used in a manner of being matched with the second user plane function, or the like.

In a possible implementation, the communication apparatus may include modules or units that one-to-one correspond to the methods/operations/steps/actions described in the fourth aspect or the fifth aspect, for example, a processing unit and an interface unit. The module or the unit may be a hardware circuit, may be software, or may be implemented by the hardware circuit in combination with the software.

According to a tenth aspect, an embodiment of this application provides a communication apparatus. The communication apparatus includes an interface circuit and a processor, and the processor and the interface circuit are coupled to each other. The processor is configured to implement, via a logic circuit or by executing instructions, the method according to the first aspect, the second aspect, the third aspect, the fourth aspect, or the fifth aspect. The interface circuit is configured to receive a signal from a communication apparatus other than the communication apparatus and transmit the signal to the processor, or send a signal from the processor to a communication apparatus other than the communication apparatus. It may be understood that the interface circuit may be a transceiver, a transceiver device, a transceiver unit, or an input/output interface.

Optionally, the communication apparatus may further include a memory, configured to store instructions executed by the processor, store input data required by the processor to run the instructions, or store data generated after the processor runs the instructions. The memory may be a physically independent unit, or may be coupled to the processor, or the processor includes the memory.

According to an eleventh aspect, an embodiment of this application provides a computer-readable storage medium. The computer-readable storage medium stores a computer program or instructions. When the computer program or the instructions are executed by a processor, the method according to the first aspect, the second aspect, the third aspect, the fourth aspect, or the fifth aspect can be implemented.

According to a twelfth aspect, an embodiment of this application further provides a computer program product, including a computer program or instructions. When the computer program or the instructions are executed by a processor, the method according to the first aspect, the second aspect, the third aspect, the fourth aspect, or the fifth aspect can be implemented.

According to a thirteenth aspect, an embodiment of this application further provides a chip system. The chip system includes a processor, the processor is configured to be coupled to a memory, and the memory is configured to store a program or instructions. When the program or the instructions are executed by the processor, the method according to the first aspect, the second aspect, the third aspect, the fourth aspect, or the fifth aspect can be implemented.

According to a fourteenth aspect, an embodiment of this application further provides a communication system. The system may include the first session management network element in the first aspect, the first user plane function network element in the second aspect, the second session management network element in the third aspect, and the second user plane function network element in the fourth aspect or the fifth aspect.

For technical effects that can be achieved in the second aspect to the fourteenth aspect, refer to the technical effects that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of ULCL steering according to an embodiment of this application;
FIG. 3 is a diagram of network element deployment of a core network according to an embodiment of this application;
FIG. 4 is a diagram of a ULCL steering solution according to an embodiment of this application;
FIG. 5 is a diagram 1 of a communication method according to an embodiment of this application;
FIG. 6 is a diagram of a logical relationship of information elements according to an embodiment of this application;
FIG. 7 is a diagram 1 of IP address configuration according to an embodiment of this application;
FIG. 8 is a diagram 2 of IP address configuration according to an embodiment of this application;
FIG. 9 is a diagram 2 of a communication method according to an embodiment of this application;
FIG. 10 is a diagram of two-stage steering according to an embodiment of this application;
FIG. 11 is a diagram of packet steering for a terminal device according to an embodiment of this application;
FIG. 12 is a diagram 3 of a communication method according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

For ease of understanding by a person skilled in the art, some terms in embodiments of this application are first explained and described.
(1) A dedicated data network (data network, DN) may also be referred to as a special data network, a dedicated network, a private network, or the like, is usually an inhouse network, and may be an intranet of an enterprise, an intranet of a campus, an intranet of a shopping mall/supermarket, or the like.
(2) A general DN may also be referred to as a public network, a large network, or the like, is usually the internet (internet), or may be an access point or an access network for an operator to access the internet, for example, a 3gnet of China Unicom.
(3) Anchor UPF network element: In embodiments of this application, each UPF network element that can communicate with a DN through an N6 interface may be referred to as an anchor UPF network element, or referred to as a UPF network element having an anchor function.

The technical solutions in embodiments of this application may be applied to various communication systems, for example, may be applied to communication systems such as a 4th generation (4th generation, 4G) communication system and a 5th generation (5th generation, 5G) communication system, and may be further applied to a communication system evolved after 5G, for example, a 6th generation (6th generation, 6G) communication system. The following describes some network architectures to which this application is applicable. In the following description, an example in which a terminal device is user equipment (user equipment, UE) is used.

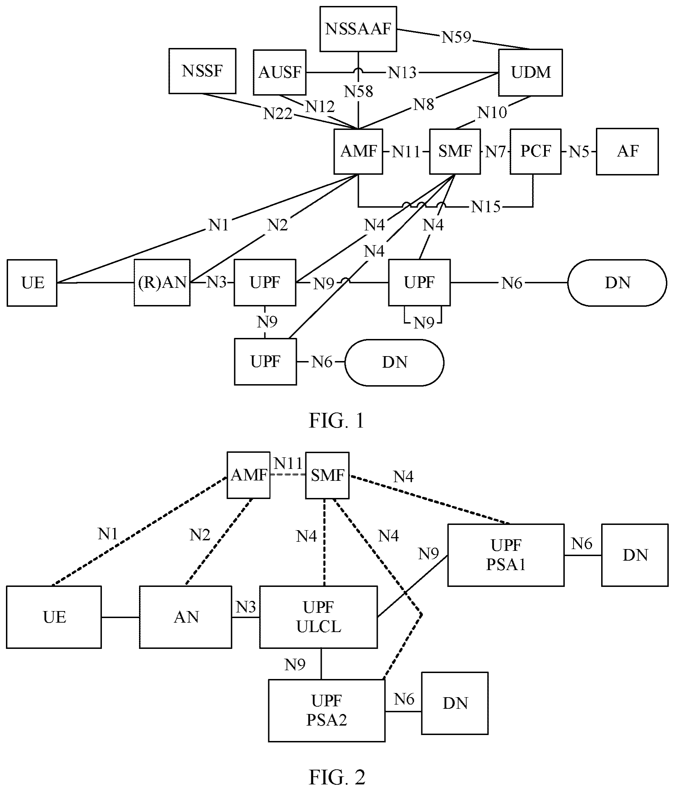

FIG. 1 is a diagram of a possible 5G network architecture to which this application is applicable. The 5G network architecture includes UE, a data network (data network, DN), and an operator network. The operator network may include one or more of the following network elements (or devices): an access network (access network, AN) device or a radio access network (radio access network, RAN) device, a user plane function (user plane function, UPF) network element, an access and mobility management function (access and mobility management function, AMF) network element, a session management function (session management function, SMF) network element, a policy control function (policy control function, PCF) network element, an application function (application function, AF) network element, a network slice selection function (network slice selection function, NSSF) network element, an authentication service function (authentication server function, AUSF) network element, a user data management (user data management, UDM) network element, and a network slice-specific authentication and authorization function (network slice-specific authentication and authorization function, NSSAAF) network element. In the operator network, a network element or device other than the access network device may be referred to as a core network element or a core network device. It should be understood that there may be one or more network elements/devices in FIG. 1 during deployment.

Terminal device: The terminal device and an access network device communicate with each other by using a specific air interface technology. An air interface may be a radio air interface based on a 5G standard. For example, the air interface is a new radio (new radio, NR) air interface. Alternatively, the air interface may be an air interface based on a 5G next-generation mobile communication network technology standard. Alternatively, the air interface may be an air interface based on a 4G standard (for example, a long term evolution (long term evolution, LTE) system). The terminal device may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a machine type communication (machine type communication, MTC) terminal, or another device that can access a network.

Access network device: The access network device is mainly responsible for functions such as radio resource management, quality of service (quality of service, QoS) management, and data compression and encryption on an air interface side. The access network device may be a base station (base station), a pole site, an integrated access and backhaul (integrated access and backhaul, IAB) node, a NodeB (NodeB), a mobile base station, an evolved NodeB (evolved NodeB, eNodeB), a transmission reception point (transmission reception point, TRP), a radio access network, a radio access network device, an evolved NodeB (evolved NodeB, eNodeB) in an LTE system or an LTE-Advanced (LTE-Advanced, LTE-A) system, a next generation NodeB (next generation NodeB, gNB) in a 5G mobile communication system, a NodeB in a future mobile communication system, or the like, or may be a module or unit that completes some functions of the base station, for example, may be a central unit (central unit, CU), or may be a distributed unit (distributed unit, DU). The radio access network device may be a macro base station, may be a micro base station (also referred to as a small cell) or an indoor base station, or may be a relay node, a donor node, or the like. A specific technology and a specific device form used by the access network device are not limited in embodiments of this application.

In addition, the access network device may alternatively be an untrusted non-3rd generation partnership project (3rd generation partnership project, 3GPP) access network (untrusted non-3GPP access network) device. The untrusted non-3GPP access network device may allow a terminal device to interconnect with a 3GPP core network by using a non-3GPP technology. The non-3GPP technology includes, for example, wireless fidelity (wireless fidelity, Wi-Fi), worldwide interoperability for microwave access (worldwide interoperability for microwave access, WiMAX), and a code division multiple access (code division multiple access, CDMA) network, and may directly access the 3GPP core network compared with a trusted non-3GPP access network device. The network element needs to interconnect with a 3GPP core network through a security tunnel set up by a security gateway. The security gateway is, for example, an evolved packet data gateway (evolved packet data gateway, ePDG) or a non-3GPP interworking function (non-3GPP interworking function, N3IWF) network element.

AMF network element: The AMF network element is a core network element, and is mainly responsible for signaling processing, for example, functions such as access control, mobility management, attachment and detachment, and gateway selection. When serving a session in a terminal device, the AMF network element may provide a control-plane storage resource for the session, and store a session identifier, an SMF network element identifier associated with the session identifier, and the like.

SMF network element: The SMF network element is responsible for user plane network element selection, user plane network element redirection, internet protocol (internet protocol, IP) address assignment, bearer setup, modification, and release, and QoS control.

UPF network element: The UPF network element is responsible for forwarding and receiving user data in a terminal device. The UPF network element may receive user data from a data network, and transmit the user data to the terminal device via an access network device. The UPF network element may alternatively receive user data from the terminal device via the access network device, and forward the user data to the data network. A transmission resource and a scheduling function in the UPF network element that provide a service for the terminal device are managed and controlled by the SMF network element.

PCF network element: The PCF network element mainly supports providing of a unified policy framework to control a network behavior and providing of a policy rule for a control layer network function, and is responsible for obtaining policy-related user subscription information.

AUSF network element: The AUSF network element mainly provides an authentication function, and supports authentication of 3GPP access and non-3GPP access.

NEF network element: The NEF network element mainly supports secure interaction between a 3GPP network and a third-party application. The NEF network element can securely expose a network capability and an event to a third party, to enhance or improve quality of service of the application. The 3GPP network can also securely obtain related data from the third party, to enhance intelligent decision-making of the network. In addition, the network element supports restoring structured data from a unified data repository or storing structured data in the unified data repository.

UDM network element: Main functions of the UDM network element include: supporting authentication credential processing, user identity processing, access authorization, registration and mobility management, subscription management, short message service management, and the like in a 3GPP authentication and key agreement mechanism.

UDR network element: The UDR network element is mainly responsible for storing structured data. Stored content includes subscription data and policy data, externally exposed structured data, and application-related data.

NRF network element: Main functions of the NRF network element include: a service discovery function, maintaining an available network function (network function, NF) text of an NF instance and a supported service thereof.

NSSF network element: Main functions of the NSSF network element include: selecting a group of network slice instances for a terminal device, determining allowed NSSAI, determining an AMF network element set that can serve the terminal device, and the like.

AF network element: The AF network element mainly supports interacting with a 3GPP core network to provide a service, for example, affecting a data routing decision and a policy control function, or providing some third-party services for a network side.

An N4 interface is an interface through which a control plane SMF network element is connected to a user plane UPF network element. The SMF network element may interact with the UPF network element through the N4 interface, to complete creation, modification, release, and the like of a user plane session, so that a user (namely, UE) accesses the internet via the UPF network element.

An N9 interface is a user plane interface between an intermediate (intermediate, I)-UPF and a UPF, and is used to transmit uplink and downlink user data flows between UPF network elements. When an anchor UPF network element can cover a location of a user, the anchor UPF network element is directly connected to an (R)AN through an N3 interface. When an anchor UPF network element cannot cover a location of a user, an I-UPF network element is inserted between the anchor UPF network element and an (R)AN, the I-UPF network element is decoupled from the (R)AN through an N3 interface, and is connected to the anchor UPF network element through an N9 interface. In another possible scenario, when a user needs to perform steering locally, a ULCL UPF network element may be separately connected to a secondary anchor UPF network element and a primary anchor UPF network element through an N9 interface.

An N7 interface is an interface between an SMF network element and a PCF network element. The SMF network element may obtain a session policy from the PCF network element through the N7 interface.

An N16a interface is an interface between an I-SMF and an SMF. When a user performs access at a roaming location during cross-province (cross-area) roaming, an I-SMF network element in a visited (or roaming) province may be connected to an SMF network element in a home province through the N16a interface, to transmit session information.

In FIG. 1, N1, N2, N5, N6, N7, N8, N10, N11, N12, N13, N15, N22, N58, and N59 are interface sequence numbers. For example, for a meaning of the interface sequence number, refer to a definition in the 3GPP standard protocol.

FIG. 2 is a diagram of ULCL steering according to an embodiment of this application. A ULCL UPF network element can perform traffic steering on user data, and separately steer packets of a user to a PDU session anchor (PDU Session anchor, PSA)2 UPF network element (a secondary anchor UPF) and a PSA1 UPF network element (a primary anchor UPF) according to a ULCL rule. The ULCL UPF network element is a UPF network element that has or supports a function of a ULCL, and a PSA network element is a UPF network element that has or supports a function of a PSA. The PSA is a PDU session anchor, and is a processing point for terminating a general packet radio service (general packet radio service, GPRS) tunneling protocol (GRPS tunneling protocol, GTP) GTP tunnel. Only a UPF network element serving as a PSA or a UPF network element having a function of a PSA can be connected to a DN through an N6 interface. The PSA1 UPF network element and the PSA2 UPF network element may separately provide N6 interfaces for steering packets to different DNs. The ULCL UPF network element identifies uplink packets (or traffic) according to a traffic steering rule and determines whether to send the packet to a primary anchor or a secondary anchor. Generally, a packet that matches the traffic steering rule accesses a local DN through an N6 interface of the secondary anchor, and another packet is sent to the primary anchor through a GTP tunnel of an N9 interface to access the internet.

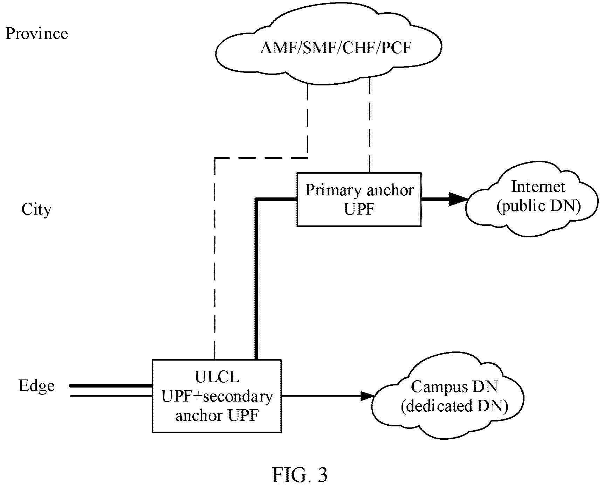

The 5G network architecture is still used for description. Refer to a diagram of network element deployment of a core network shown in FIG. 3. An AMF network element, an SMF network element, a PCF network element, a charging function (charging function, CHF) network element, and the like are usually deployed by province. A primary anchor UPF network element functioning as a public network UPF network element is deployed by city or province and interconnects to the internet (namely, a public DN). A ULCL UPF network element and a secondary anchor UPF network element that serve as dedicated network UPF network elements are usually co-deployed at the edge of an operator network and close to a campus DN (namely, a dedicated DN).

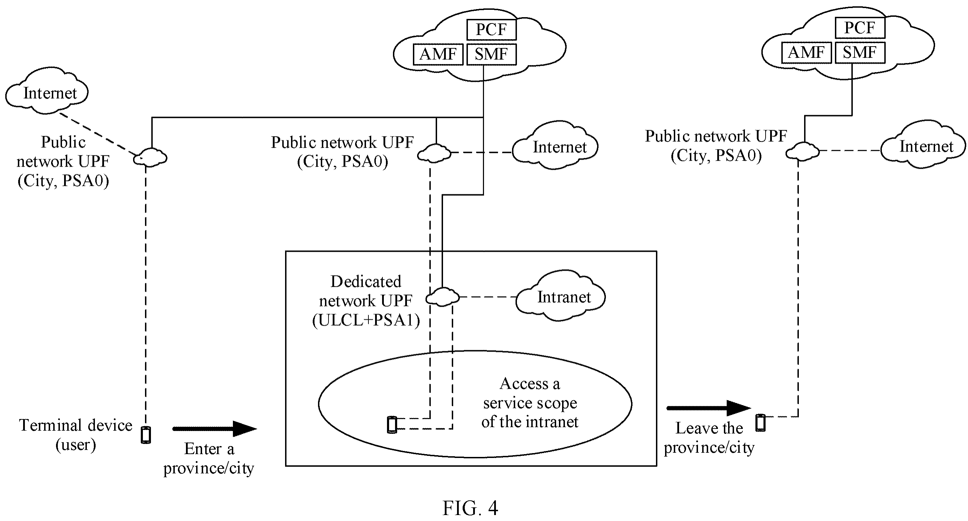

Refer to a ULCL steering solution shown in FIG. 4. For an intranet (a dedicated data network) that is at a home location and to which a terminal device subscribes, the terminal device may steer packets for the intranet and the internet (a public data network) via a dedicated network UPF network element in a city in which the intranet is located. However, an AMF network element, an SMF network element, a PCF network element, and the like are usually deployed by province. Although SMF network elements and UPF network elements in all provinces and cities support access to the internet, there are a large quantity of dedicated data networks for services and the like, a traffic steering rule of a packet for a dedicated data network is usually preconfigured or defined only on an SMF network element or a UPF network element at a location of the dedicated data network, and a user performs access, during cross-province/cross-city roaming, by using an SMF/a UPF at a roaming province/city as an anchor. Due to reasons such as the SMF network element in the roaming province/city cannot directly manage a UPF network element in a home province/city, and the traffic steering rule of the packet for the dedicated data network is usually preconfigured or defined only on the network element or the UPF network element at the location of the dedicated data network, there is a problem that the user cannot continue to access the dedicated data network and can only access the internet when leaving the location of the dedicated data network. Although there is a solution in which all traffic of a user at a roaming location is considered to be returned to a home province for processing, in this solution, traffic of a public data network also needs to be returned to the home province for processing, resulting in traffic circumambulation. In addition, when all the traffic of the user at the roaming location is returned to the home province for processing, the home province (for example, an SMF network element in the home province) allocates an IP address of a session to the user instead of allocating the IP address by the roaming location. This does not conform to the IP address allocation specification.

In view of this, this application provides a communication method and apparatus, to create a session via an SMF network element at a visited location (or a roaming location) based on an identifier of a dedicated data network, so that a terminal device user can access both a public data network and the dedicated data network. In addition, traffic of the public data network is offloaded at the visited location (or the roaming location), to avoid traffic circumambulation. The following describes in detail embodiments of this application with reference to the accompanying drawings.

It should be understood that, in embodiments of this application, a user plane function network element may be the foregoing UPF network element, or may be a network element that has a function of the foregoing UPF network element in a future communication system such as a 6G system. A session management network element may be the foregoing SMF network element, or may be a network element that has a function of the foregoing SMF network element in a future communication system such as a 6G system. A network repository function network element may be the foregoing NRF network element, or may be a network element that has a function of the foregoing NRF network element in a future communication system such as a 6G system. Similarly, a policy control network element may be the foregoing PCF network element or the like, or may be a network element or the like that has a function of the foregoing PCF network element in a future communication system such as a 6G system. Specific forms of the user plane function network element, the session management network element, and the like are not limited in embodiments of this application. For ease of description, in embodiments of this application, an example in which the user plane function network element is the UPF network element, the session management network element is the SMF network element, and the network repository function network element is the NRF network element is used for description.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, a first session management network element and a second session management network element do not indicate that the two network elements correspond to different priorities, importance degrees, or the like.

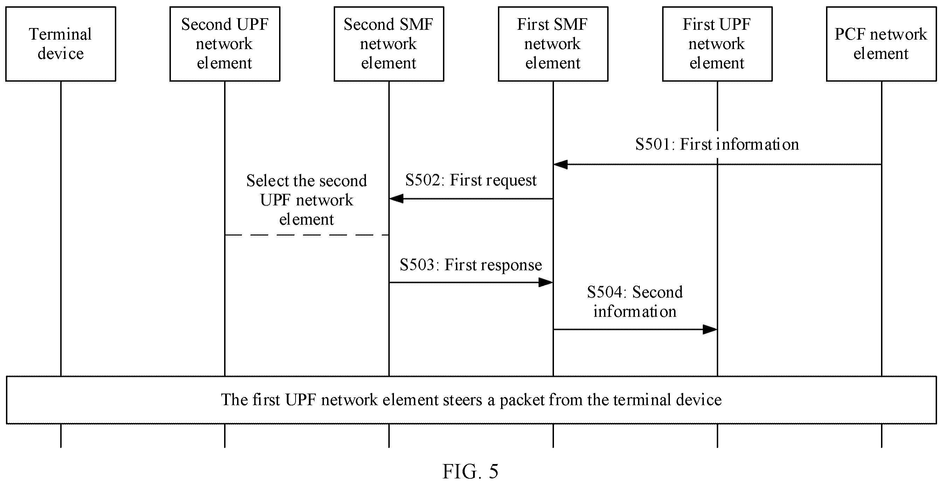

FIG. 5 is a diagram of a communication method according to an embodiment of this application. The method includes the following steps.

S501: A PCF network element sends first information to a first SMF network element, and correspondingly, the first SMF network element receives the first information.

The first information includes an identifier of a first dedicated DN (for example, a data network name (data network name, DNN) of the first dedicated DN) to which a terminal device subscribes, and the first SMF network element is an SMF network element at a visited location of the terminal device.

In this embodiment of this application, the first information may be policy/decision information delivered by the PCF network element to the first SMF network element.

In a possible implementation, when receiving a session establishment or update procedure from an AMF network element, the first SMF network element may initiate a session management policy association establishment/modification procedure with the PCF network element, and the PCF network element may deliver, to the first SMF network element in the session management policy association establishment/modification procedure, the first information including information such as the identifier of the dedicated DN to which the terminal device subscribes and a traffic steering policy for a packet (or traffic) of the terminal device.

In another possible implementation, the PCF network element may actively deliver the first information to the first SMF network element when identifying that user subscription information of the terminal device changes (for example, a service subscribed to by the terminal device changes from a public network service to a public network service and a first dedicated network service) and the user establishes a session.

After obtaining, based on the first information from the PCF network element, the identifier (for example, the DNN) of the first dedicated DN to which the terminal device subscribes, the first SMF network element may determine information about a second SMF network element that supports the first dedicated DN.

In an example, as a network element having a network repository function, an NRF network element may receive and store information about a supported dedicated DN registered by an SMF network element. The dedicated DN supported by the SMF network element may be a dedicated DN in a deployment area of the SMF network element, and the information about the dedicated DN registered by the SMF network element may include information like an identifier (for example, a DNN) of the dedicated DN. After obtaining the identifier of the first dedicated DN to which the terminal device subscribes, the first SMF network element may query, via the NRF network element, the SMF network element by which the first dedicated DN is registered, to obtain the information about the second SMF network element that supports the first dedicated DN, for example, information like an IP address and an identifier of the second SMF network element.

In some implementations, the first SMF network element locally stores or a network element, for example, a UDM network element may also store an association relationship between information about some SMF network elements and a dedicated DN registered by the SMF network element, and the first SMF network element may also obtain, via the first SMF network element or the network element, for example, the UDM, the information about the second SMF network element that supports the first dedicated DN.

In addition, it may be understood that the first information delivered by the PCF network element may further include an identifier of a general DN (for example, a DNN of the general DN) to which the terminal device subscribes, and the first SMF network element may further create a session based on the identifier of the general DN, for example, a session between the terminal device and the general DN, so that the terminal device can perform a general DN service.

S502: The first SMF network element sends a first request to the second SMF network element, and correspondingly, the second SMF network element receives the first request.

After determining the second SMF network element that supports the first dedicated DN, the first SMF network element may send the first request including the identifier of the first dedicated DN to the second SMF network element. The first request may be an activation request, a DNN activation request, a dedicated DNN activation request, or the like. In an example, in the first request, the identifier of the first dedicated DN (for example, the DNN of the first dedicated DN) may be carried by a DNN information element in the request; or the general DNN may be carried by a DNN information element, and the identifier of the first dedicated DN is carried by a selected (selected) DNN information element.

In some implementations, to facilitate sending of a downlink packet of the first dedicated DN to the terminal device, the first request may further carry first tunnel information of a first UPF network element, where the first UPF network element is a UPF network element selected by the first SMF network element based on the general DN to which the terminal device subscribes, the first tunnel information may include an IP address and/or a tunnel identifier (for example, a tunnel endpoint identifier (tunnel endpoint identifier, TEID)) of the first UPF network element.

S503: The second SMF network element sends a first response to the first SMF network element, and correspondingly, the first SMF network element receives the first response.

After receiving the first request, the second SMF network element may select, based on the identifier (for example, the DNN) of the first dedicated DN, an anchor UPF network element corresponding to the first dedicated DN, namely, a second UPF network element, and send, to the first SMF network element, the first response including second tunnel information of the second UPF network element. The second tunnel information of the second UPF network element may include an IP address and/or a tunnel identifier (for example, a TEID) of the second UPF network element.

In addition, the second SMF network element may further send third information including the first tunnel information of the first UPF network element to the second UPF network element, so that the second UPF network element can establish a downlink tunnel to the first UPF network element based on the first tunnel information of the first UPF network element. The downlink tunnel may be used to transmit a packet sent by the second UPF network element to the first UPF network element.

S504: The first SMF network element sends second information to the first UPF network element, and correspondingly, the first UPF network element receives the second information.

The second information includes the second tunnel information and a first traffic steering rule, and the first traffic steering rule indicates to send (or steer), to the second UPF network element, a packet that is for the first dedicated DN and that is sent by the terminal device. It should be understood that the packet that is for the first dedicated DN and that is sent by the terminal device may also be understood as a packet that is sent by the terminal device and whose destination address is the first dedicated DN, or a packet sent by the terminal device to the first dedicated DN.

After receiving the second tunnel information of the second UPF network element and the first traffic steering rule, the first UPF network element may establish an uplink tunnel to the second UPF network element based on the second tunnel information. The uplink tunnel may be used to transmit a packet sent by the first UPF network element to the second UPF network element. In addition, the packet sent by the terminal device may be steered according to the first traffic steering rule. For example, the packet that is for the first dedicated DN and that is sent by the terminal device is identified, and the packet of the first dedicated DN is sent to the second UPF network element through the established uplink tunnel to the second UPF network element. For a packet that is not for the first dedicated DN (for example, a packet for the general DN) and that is from the terminal device, the first user plane function network element may send (or forward) the packet to a public DN.

In a possible implementation, the first traffic steering rule may include an IP address list and/or a domain name list that are/is of the first dedicated DN. The IP address list may include one or more IP addresses corresponding to the first dedicated DN, and the domain name list may include one or more domain names corresponding to the first dedicated DN. For example, the domain name list may include a plurality of domain names of a network or a network subdirectory corresponding to the first dedicated DN, and the IP address list may include IP addresses respectively corresponding to networks or network subdirectories corresponding to the first dedicated DN.

For example, the first traffic steering rule includes the IP address list corresponding to the first dedicated DN. After receiving the packet from the terminal device, the first UPF network element may identify a destination IP address of the packet. If the destination IP address of the packet belongs to the IP address list corresponding to the first dedicated DN, the first UPF network element may send (or steer) the packet to the second UPF network element; otherwise, the first UPF network element sends (or steers) the packet to the public DN.

For example, the first traffic steering rule includes the domain name list corresponding to the first dedicated DN. After receiving the packet from the terminal device, the first UPF network element may identify a domain name carried in the packet. If the domain name carried in the packet belongs to the domain name list corresponding to the first dedicated DN, the first UPF network element may send (or steer) the packet to the second UPF network element; otherwise, the first UPF network element sends (or steers) the packet to the public DN.

In a possible implementation, the IP address list and/or the domain name list that correspond/corresponds to the first dedicated DN may be obtained based on the first information (for example, policy/decision information) delivered by the PCF network element.

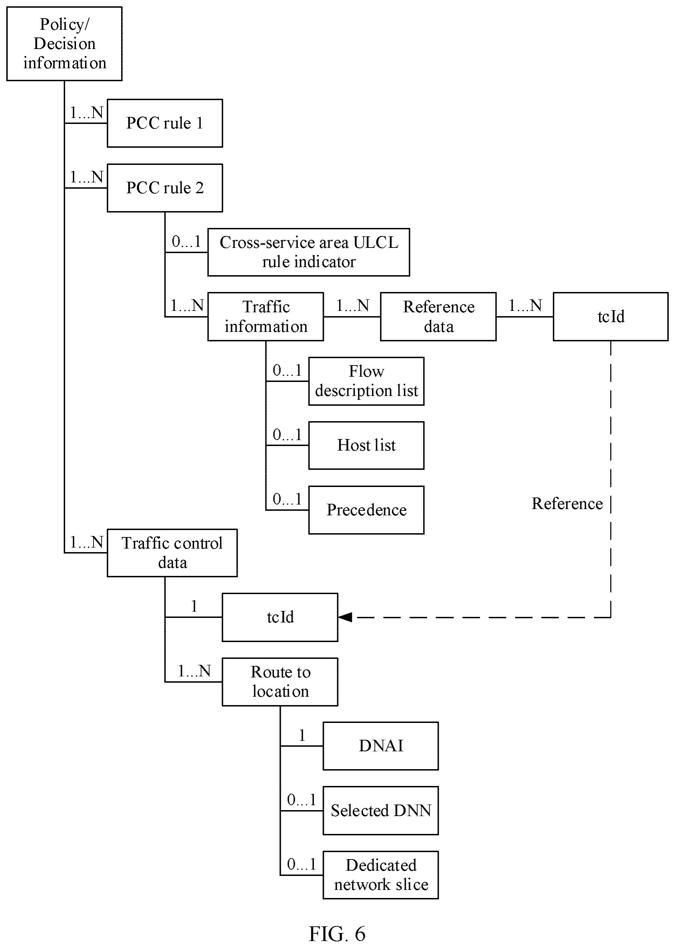

FIG. 6 is a diagram of a logical relationship of information elements transmitted through an N7 interface between the PCF network element and the first SMF network element. In this embodiment of this application, policy/decision information (Smpolicydeciston) may carry a PCC rule 1 (PCC rules-rule1) field of a public network (for example, a general DN) service rule, a PCC rule 2 (PCC rules-rule2) field of a dynamic traffic steering rule of a service of a dedicated network (for example, the first dedicated DN), and a flow information (flowinformatuin) field, and the like. Based on this, a field (for example, a cross-service area ULCL rule indicator (CrossServiceAreaULCLRuleIndicator) field) may be extended in the PCC rule, to indicate that the rule is used for steering a packet (or traffic) of a terminal device user during cross-area roaming. A flow description list (flowDescriptionList) field and a host list (hostlist) field are extended in the flowinformatuin field, to carry (or bear) an IP address list and a domain name list that correspond to a dedicated network (for example, the first dedicated DN). Alternatively, a selected DNN field may be extended in a route to location (RouteToLocation) field, to carry an identifier of a dedicated network (for example, the DNN of the first dedicated DN) at a home location, and a dedicated network slice (dedicatedNetworksnssai) field may be extended, to carry slice information of a dedicated network (for example, slice information of the first dedicated DN). In addition, the Smpolicydeciston may further carry a reference data (Reftcdata) field, a precedence (precedence) field, a traffic control data (Trafficcontroldata) field, a DN access identifier (DN access identifier, DNAI), and a tcId field, where the tcId field may be used to univocally identify traffic control policy data within a PDU session (univocally identifies the traffic control policy data within a PDU session).

In some implementations, the first SMF network element may alternatively obtain, via a network element, for example, the second SMF network element that supports the first dedicated DN, the IP address list and/or the domain name list that correspond/corresponds to the first dedicated DN. This is not limited in this application.

In addition, when the first traffic steering rule includes the domain name list corresponding to the first dedicated DN, after receiving, from the terminal device, a first packet (for example, a domain name system (domain name system, DNS) request packet) that carries a first domain name belonging to the domain name list, the first UPF network element may send the first packet to the second UPF network element, parse a second packet (for example, a DNS response packet) from the second UPF network element to obtain a source IP address of the second packet, and associate the source IP address of the second packet with the first domain name. According to the foregoing method, the first UPF network element may learn an IP address corresponding to a domain name. After subsequently receiving a packet whose destination address is the IP address, the first UPF network element may also send (or steer) the packet to the second UPF network element based on the IP address, to transmit the packet to the first dedicated DN.

It should be understood that, in this embodiment of this application, for a traffic steering rule stored in the SMF network element, the PCF network element, the UPF network element, or the like, for example, the first traffic steering rule, an IP address and/or a domain name that correspond/corresponds to a dedicated DN (for example, a campus DN) may be aggregated at a dedicated DN granularity, to optimize a data structure and reduce memory overheads.

In some implementations, after the first SMF network element creates a session to the first dedicated DN, the first UPF network element sends, to the second UPF network element, a third packet that carries an IP address of the terminal device. In an example, the third packet may be a packet actively constructed by the first UPF network element. A source IP address in GTP user plane (GRPS tunneling protocol user plane, GTP-U) encapsulation of the packet may be the IP address of the terminal device. The IP address of the terminal device may be an IP address of the terminal device at a visited location, for example, a public IP address of the terminal device in a public DN. The public IP address of the public DN may also be referred to as a public network IP address or the like, and may be allocated to the terminal device by the first SMF network element or the like at the visited location, for example, be allocated to the terminal device in a process in which the first SMF network element establishes a session from the terminal device to the public DN.

After receiving the third packet, the second UPF network element may associate the IP address of the terminal device with a dedicated IP address of the terminal device in the first dedicated DN, where an association relationship between the IP address of the terminal device and the dedicated IP address is used to perform address translation on a packet transmitted between the first dedicated DN and the terminal device. For a downlink packet between the first dedicated DN and the terminal device, the dedicated IP address (namely, a dedicated network IP address) may be replaced with the IP address (namely, a public or public network IP address) of the terminal device. For an uplink packet between the first dedicated DN and the terminal device, the IP address (namely, a public or public network IP address) of the terminal device is replaced with the dedicated IP address (namely, a dedicated network IP address). 1:1 address translation between the IP address (namely, public or public network IP address) of the terminal device and the dedicated IP address (namely, dedicated network IP address) is supported. It should be understood that the address translation in embodiments of this application may be used for IP address translation or replacement at a network layer (layer 3), an application layer, or the like.

In addition, a GTPU private extension header (for example, a GTPU packet header) carried in the third packet sent by the first UPF network element may further carry indication information indicating that the third packet is a packet constructed by the network. The second UPF network element may not charge the third packet that carries the indication information, the third packet is not forwarded to the first dedicated DN, and may be only used to obtain the IP address that is of the terminal device and that is allocated at the visited location (or the roaming location).

In some implementations, the first SMF network element may further send the IP address of the terminal device to the second SMF network element, and the second SMF network element sends the IP address of the terminal device to the second UPF network element. In an example, when the first SMF network element sends the first request to the second SMF network element through an N16a interface, the first request may further carry the IP address of the terminal device. When the second SMF network element sends, to the second UPF network element, the third information including the first tunnel information of the first UPF network element, the third information may further carry the IP address of the terminal device and the like, so that the second UPF network element learns of the IP address of the terminal device at the visited location (or the roaming location).

It should be understood that, in embodiments of this application, the dedicated IP address of the terminal device in the first dedicated DN may be allocated to the terminal device by the second UPF network element, or may be allocated to the terminal device by the second SMF network element, the UDM network element, or a server corresponding to the first dedicated DN, for example, an authentication, authorization, and accounting (authentication, authorization, accounting, AAA) server, and is delivered to the second UPF network element by the second SMF network element and the like. For example: The second SMF network element may further include, in the third information sent to the second UPF network element, the dedicated IP address of the terminal device in the first dedicated DN.

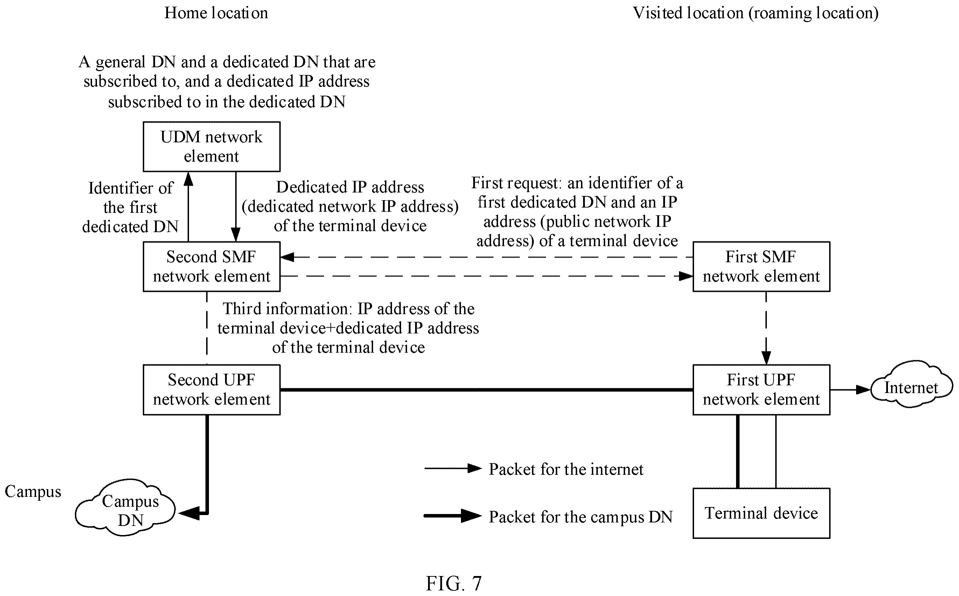

As shown in FIG. 7, the UDM network element may store information about the general DN and the dedicated DN (for example, the first dedicated DN) to which the terminal device subscribes, and may further store or configure a dedicated IP address (static) to which the terminal device subscribes in the first dedicated DN. After the second SMF network element receives the first request (including the identifier of the first dedicated DN and the IP address (the public or public network IP address) of the terminal device) from the first SMF network element, the second SMF network element may query, via the UDM network element, the dedicated IP address to which the terminal device subscribes in the first dedicated DN, and may include, in the third information sent to the second UPF network element, the dedicated IP address and the IP address (public or public network IP address) of the terminal device, so that the second UPF network element can associate the IP address of the terminal device with the dedicated IP address of the terminal device in the first dedicated DN, to perform address translation on a packet transmitted between the first dedicated DN and the terminal device.

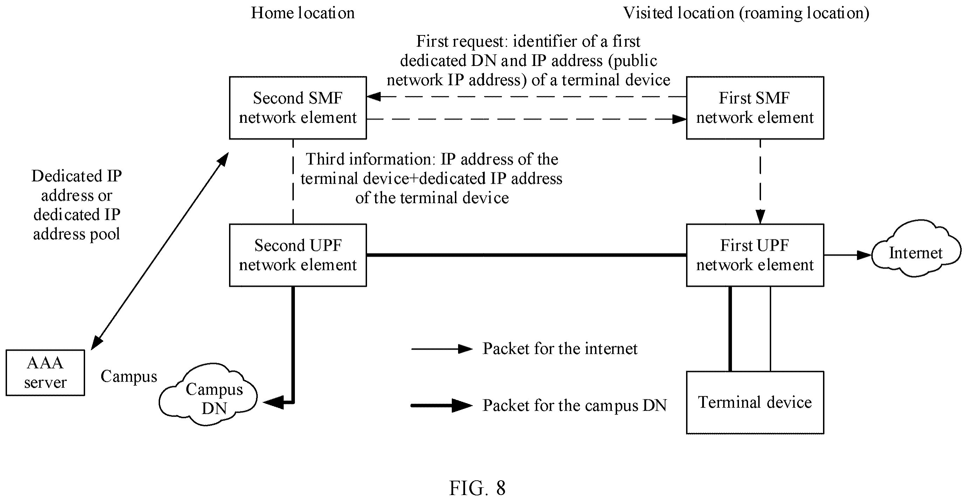

As shown in FIG. 8, after the second SMF network element receives the first request (including the identifier of the first dedicated DN and the IP address (the public or public network IP address) of the terminal device) from the first SMF network element, the second SMF network element may obtain, via an AAA server associated with the first dedicated DN, the dedicated IP address allocated to the terminal device in the first dedicated DN by the AAA server, and may include, in the third information sent to the second UPF network element, the dedicated IP address of the terminal device in the first dedicated DN and the IP address (the public or public network IP address) of the terminal device, so that the second UPF network element can associate the IP address of the terminal device with the dedicated IP address of the terminal device in the first dedicated DN, to perform address translation on a packet transmitted between the first dedicated DN and the terminal device. In addition, it should be understood that data or information exchanged between the second SMF network element and the AAA server may be forwarded by the second UPF network element or the like.

In some implementations, the second SMF network element may further obtain a dedicated IP address pool of the first dedicated DN via a server associated with the first dedicated DN, for example, the AAA server. The dedicated IP address pool includes a plurality of dedicated IP addresses. After the second SMF network element obtains the dedicated IP address pool from the AAA server, the second SMF network element may allocate a dedicated IP address in the dedicated IP address pool to the terminal device, or may send the dedicated IP address pool to the second UPF network element, and the second UPF network element allocates a dedicated IP address in the dedicated IP address pool to the terminal device.

A communication method provided in an embodiment of this application is described by using an example in which a first dedicated DN is a campus DN, a public DN is the internet, and a terminal device accesses a campus DN at a home location of the terminal device at a roaming location. The method may include the following steps.

S901: A second SMF network element at a home location registers a supported first dedicated DN with an NRF network element.

S902: A PCF network element sends first information to a first SMF network element at a roaming location.

The first information may include an identifier of the campus DN to which the terminal device subscribes (for example, a DNN of the campus DN), and an IP address list and/or a domain name list that correspond/corresponds to the campus DN.

S903: The first SMF network element at the roaming location obtains information about the second SMF network element at the home location via the NRF network element.

S904: The first SMF network element at the roaming location sends a first activation request to the second SMF network element at the home location, where the first activation request carries the identifier of the campus DN.

S905: The second SMF network element at the home location selects a second UPF network element for the campus DN based on the identifier of the campus DN.

In addition, the first activation request may further carry first tunnel information of a first UPF network element, and the second SMF network element at the home location may further send the first tunnel information to the second UPF network element, so that the second UPF network element establishes a downlink tunnel to the first UPF network element.

S906: The second SMF network element at the home location sends a first activation response to the first SMF network element at the roaming location, where the activation response carries second tunnel information of the second UPF network element.

S907: The first SMF network element at the roaming location sends second information to the first UPF, where the second information includes the second tunnel information and a first traffic steering rule.

The first traffic steering rule indicates to send, to the second UPF network element, a packet that is for the campus DN and that is sent by the terminal device. The first UPF network element may establish an uplink tunnel to the second UPF network element based on the second tunnel information, and may steer, according to the first traffic steering rule, a packet that is for the campus DN and that is from the terminal device and a packet that is for the internet and that is from the terminal device. For example, the packet that is for the campus DN and that is from the terminal device is sent to the second UPF network element through the uplink tunnel established between the second UPF network element and the first UPF network element, so that the second UPF network element forwards the packet to the campus DN; and the packet that is for the internet and that is from the terminal device is sent to the internet.

In addition, the first UPF network element may further construct a GTPU packet that carries an IP address allocated to the terminal device by the first SMF network element, the first UPF network element, or the like, and send the GTPU packet to the second UPF network element. The second UPF network element associates the IP address of the terminal device with a dedicated IP address of the terminal device in the campus DN, to perform address translation and the like on a packet transmitted between the campus DN and the terminal device.

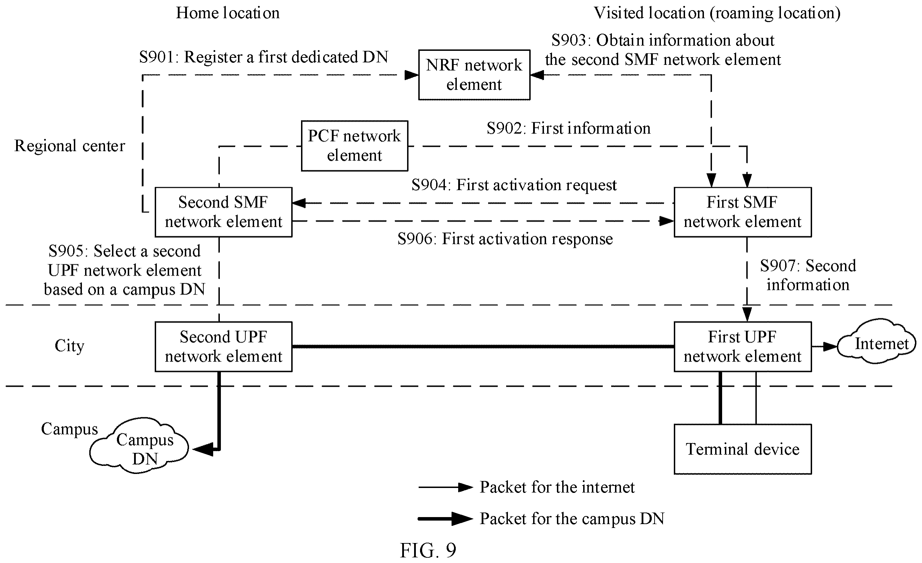

For an implementation of the communication method shown in FIG. 9, refer to the descriptions of the communication method shown in FIG. 5. Details are not described again.

In addition, in view of some scenarios, some dedicated DNs for implementing a specific service may be further deployed in a specific area, regardless of whether a terminal device user is a user in a location (for example, a city or a province) of the dedicated DN for the specific service, the dedicated DN for the specific service may be used when the terminal device user enters the specific area of the service. In this embodiment of this application, multi-stage steering of a packet of the terminal device may be supported.

For example, when there is a second dedicated DN in the visited location (or the roaming location) of the terminal device, a first SMF network element at the visited location may further send the first tunnel information of the first UPF network element and a third traffic steering rule to a third UPF network element. The third traffic steering rule indicates the third user plane function network element to send, to the first UPF network element, a packet that is sent by the terminal device and that is not for the second dedicated DN, the third UPF network element is a UPF network element selected by the first SMF network element based on the second dedicated DN, and the third traffic steering rule may include an IP address list and/or a domain name list that correspond/corresponds to the second dedicated DN.

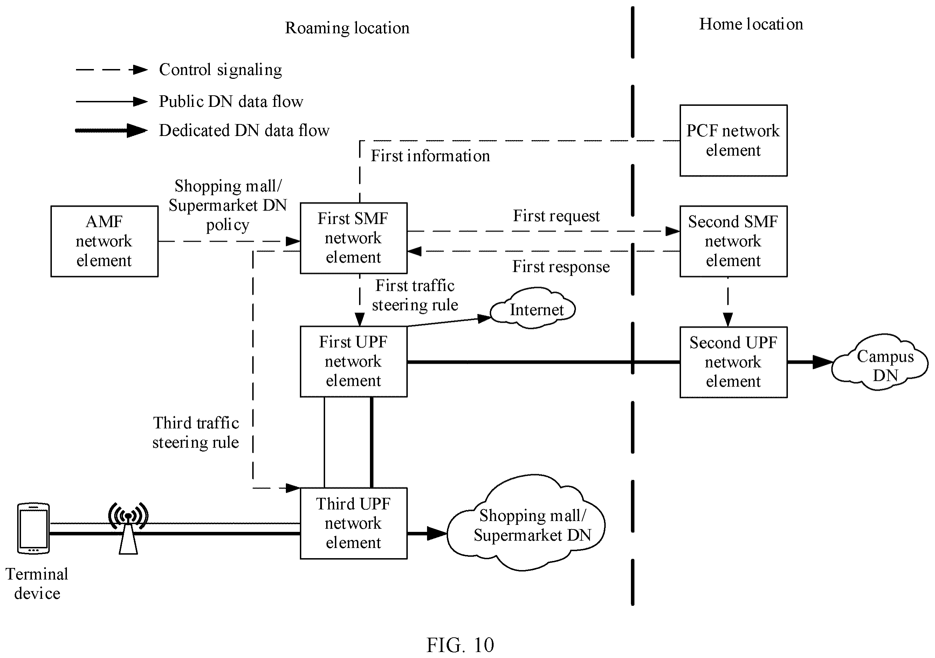

Refer to FIG. 10. For example, the second dedicated DN is a shopping mall/supermarket DN, the first dedicated DN is a campus DN, a general DN is the internet, and the terminal device is a dual-domain user of the campus DN and the internet. The third UPF network element at the roaming location has a function of ULCL+secondary anchor (corresponding to an anchor of the shopping mall/supermarket DN), and can perform one-stage steering on a packet from the terminal device according to the third traffic steering rule, to send a packet that is from the terminal device and that is for the shopping mall/supermarket DN to the shopping mall/supermarket DN and send a packet that is from the terminal device and that is not for the shopping mall/supermarket DN (for example, a packet for the campus DN packet and the internet) to the first UPF network element. The first UPF network element has a function of a primary anchor (corresponding to an anchor of the internet), and can perform two-stage steering on a packet from the third UPF network element according to the first traffic steering rule, to send a packet for the campus DN to the second UPF network element and send a packet for the internet to the internet. In addition, the first SMF network element may further deliver the first traffic steering rule, a charging rule of a packet (or traffic) for the campus DN, a charging rule of a packet (or traffic) for the internet, a charging rule of a packet (or traffic) for the shopping mall/supermarket DN, and the like to the third UPF network element, to charge traffic of the terminal device.

In the example in FIG. 10, through two-stage steering, the packet that is sent by the terminal device and that is for the internet can be offloaded at the roaming location, and traffic of a campus DN at a home location can be steered to a second UPF network element that serves as a campus DN anchor at the home location.

In some implementations, when the visited location of the terminal device is the same as a location of the first dedicated DN, for example, in a same province or a same city, the communication method in this application may also be used. In other words, a second SMF network element at the visited location and a first SMF network element that supports the first dedicated DN may alternatively be a same SMF network element.

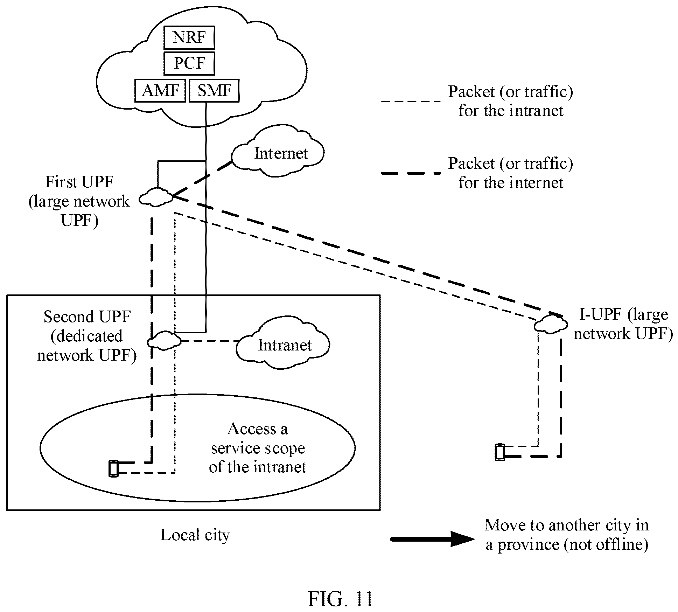

Refer to a diagram of steering of a packet of a terminal device shown in FIG. 11. In FIG. 11, an intranet identifies the first dedicated DN, and the internet identifies the public DN. When the terminal device is located in a service area of the second UPF network element, the first SMF network element (for example, an SMF network element in FIG. 11) may send fourth information to the second UPF network element, where the fourth information includes the first tunnel information of the first UPF network element and the second traffic steering rule, the second traffic steering rule may include the IP address list and/or the domain name list that correspond/corresponds to the first dedicated DN, and the second traffic steering rule indicates the second UPF network element to send, to the first UPF network element, a packet that is not for the first dedicated DN and that is sent by the terminal device. When the first SMF determines that the terminal device moves out of the service area of the second UPF network element, the first SMF network element may send the second information to the first UPF network element, where the second information includes the second tunnel information and the first traffic steering rule.

In other words, when the terminal device is located in a service scope of the first dedicated DN (for example, a campus corresponding to the first dedicated DN), the SMF network element may deliver a traffic steering rule to the second UPF network element (namely, a dedicated network UPF corresponding to the dedicated DN), and the second UPF is used to perform packet steering. When the terminal device is located outside the service scope of the first dedicated DN, the SMF network element may deliver the traffic steering rule to the first UPF network element (namely, a large network UPF or a public network UPF corresponding to the general DN), and the first UPF network element is used to perform packet steering. The SMF network element implements ULCL steering point migration based on a location of a terminal device user.

In addition, it should be understood that the foregoing is mainly described from a perspective that both the home location and the visited location (roaming location) are 5G networks, and the terminal device performs access at the visited location over the 5G network. It may be understood that, in some implementations, the terminal device may alternatively perform access at the visited location (the roaming location) over 4G (for example, access a public land mobile network (public land mobile network, PLMN) at the visited location over a 4G network). When the terminal device performs access at the visited location over 4G, the first session management function network element (namely, the foregoing first SMF network element) may alternatively be a session management and packet data network gateway control plane function converged network element at the visited location, for example, a network element having a function of an SMF network element in a 5G network and a function of a PGW-C in a 4G network, and may be referred to as an SMF&PGW-C network element, and the first user plane function network element (for example, the foregoing first UPF network element) may be a user plane function and packet data network gateway data plane function converged network element, for example, a network element having a function of a UPF network element in a 5G network and a function of a PGW-U in a 4G network, and may be referred to as a UPF&PGW-U network element.

In a possible implementation, a mobility management entity (mobility management entity, MME) at the visited location may select the SMF&PGW-C network element for the terminal device for access when the accessed terminal device subscribes to a 5G dedicated DN (for example, the first dedicated DN).

In addition, when the terminal device performs access at the visited location (the roaming location) over 4G, the UPF&PGW-U network element may further perform 4G and 5G packet format conversion on a packet transmitted between the first dedicated DN and the terminal device, to support transmission of the packet between the first dedicated DN and the terminal device.

For example, the packet transmitted between the first dedicated DN and the terminal device is a GTP-U packet. Because the terminal device performs access at the visited location over 4G, a packet sent by the terminal device to the first dedicated DN is a 4G GTP-U packet. After receiving the 4G GTP-U packet, the UPF&PGW-U network element may convert the packet into a 5G GTP-U packet, for example, adding a field required by a 5G GTP-U packet, for example, a QoS flow identifier (QoS flow identifier) to a 4G GTP-U packet header, and send the 5G GTP-U packet to the first dedicated DN after converting the 4G GTP-U packet into the 5G GTP-U packet. Similarly, a packet sent by the first dedicated DN to the terminal device is a 5G GTP-U packet. After receiving the 5G GTP-U packet, the UPF&PGW-U network element may convert the packet into a 4G GTP-U packet, for example, deleting a field that is required only by the 5G GTP-U packet, for example, the QoS flow identifier from a 5G GTP-U packet header, and send the 4G GTP-U packet to the terminal device after converting the 5G GTP-U packet into the 4G GTP-U packet.

In addition, it may be understood that, in this embodiment of this application, the first session management function network element may be not only the SMF&PGW-C network element, but also an SMF&PGW network element, or an SMF&PGW-C&PGW-U network element. In other words, when the terminal device performs access at the visited location over 4G, the first session management function network element can not only have a function of the SMF network element and a function of a PGW-C, but also have a function of a PGW-U. That the first session management function network element is the SMF&PGW-C network element is merely an example, and does not constitute a limitation on this application.

Similarly, the first user plane function network element may be not only the UPF&PGW-U network element, but also a UPF&PGW network element, or a UPF&PGW-C&PGW-U network element. In other words, when the terminal device performs access at the visited location over 4G, the first user plane function network element can not only have a function of the UPF network element and a function of a PGW-U in the 5G network, but also have a function of a PGW-C. That the first user plane function network element is the UPF&PGW-U network element is merely an example, and does not constitute a limitation on this application.

The following describes a communication method provided in an embodiment of this application by using an example in which a terminal device performs access at a roaming location (or a visited location) over 4G, a first session management function network element (namely, the foregoing first SMF network element) is a UPF&PGW-U network element, a first user plane function network element (for example, the foregoing first UPF network element) is a UPF&PGW-U network element, a first dedicated DN is a campus DN, a public DN is the internet, and the terminal device accesses a campus DN at a home location of the terminal device at the roaming location. The method may include the following steps.

S1201: An MME network element selects an SMF&PGW-C network element (namely, the first SMF network element) based on user subscription information of the terminal device.

In this embodiment of this application, a UDM network element or a UDM&HSS network element (a UDM and HSS converged network element or device) may retain the user subscription information of the terminal device, and the user subscription information of the terminal device may include information about a 5G dedicated DN (for example, the first dedicated DN) to which the terminal device subscribes. When the terminal device performs access at the visited location over 4G, the MME network element at the visited location may select, for the terminal device for access when the user subscribes to the 5G dedicated DN, the SMF&PGW-C network element that has both a function of a 5G SMF network element and a function of a 4G PGW-C network element, and the UPF&PGW-U that has both a function of a 5G UPF network element and a function of a 4G PGW-U network element.

S1202: A PCF network element sends first information to the SMF&PGW-C network element (namely, the first SMF network element) at the roaming location.

The first information may include an identifier of a campus DN to which the terminal device subscribes (for example, a DNN of the campus DN), and an IP address list and/or a domain name list that correspond/corresponds to the campus DN.

In an example, when the terminal device performs access, the SMF&PGW-C network element may initiate a session management policy association establishment/modification procedure with the PCF network element, and the PCF network element may deliver, to the SMF&PGW-C network element in the session management policy association establishment/modification procedure, the first information including information such as an identifier of the dedicated DN to which the terminal device subscribes and a traffic steering policy for a packet (or traffic) of the terminal device. Alternatively, the PCF network element may actively deliver the first information to the SMF&PGW-C network element when identifying that the user subscription information of the terminal device changes (for example, a service subscribed to by the terminal device changes from a public network service to a public network service and a first dedicated network service) and the user establishes a session.

S1203: The SMF&PGW-C network element (namely, the first SMF network element) at the roaming location sends a first activation request to a second SMF network element at the home location, where the first activation request carries the identifier of the campus DN.

It should be understood that the SMF&PGW-C network element supports 4G/5G parameter mapping through an N16a interface. When the terminal device performs access at the roaming location over 4G, the SMF&PGW-C network element may map a 4G parameter of the terminal device to a 5G parameter, to establish a session of the terminal device to the dedicated DN (for example, the first dedicated DN). For example, a quantity of bits in a tracking area identity (tracking area identity, TAI) of the terminal device in 4G is less than that in 5G, 0 may be added to the TAI of the terminal device in 4G to obtain the TAI in 5G, to ensure correctness of a TAI format in the dedicated DN (for example, the first dedicated DN). In addition, an NF instance identifier (NF Instance ID) or an IP address of the SMF&SPGW-C may be used as an AMF instance identifier (AMF instance id), and a 5G RAT value "NR" is used for a radio access technology (radio access technology). These parameters may be sent to the second SMF network element by using the first activation request, or may be sent to the second SMF network element by using another message or signaling, to establish the session of the terminal device. This is not limited in this application.

S1204: The second SMF network element at the home location selects a second UPF network element for the campus DN based on the identifier of the campus DN.

In addition, the first activation request may further carry first tunnel information of the UPF&GW-U network element (namely, the first UPF network element), and the second SMF network element at the home location may further send the first tunnel information to the second UPF network element, so that the second UPF network element establishes a downlink tunnel to the UPF&GW-U network element (namely, the first UPF network element).

S1205: The second SMF network element at the home location sends a first activation response to the SMF&PGW-C network element at the roaming location (namely, the first SMF network element), where the activation response carries second tunnel information of the second UPF network element.

S1206: The SMF&PGW-C network element (namely, the first SMF network element) at the roaming location sends second information to the UPF&GW-U network element (namely, the first UPF network element), where the second information includes the second tunnel information and a first traffic steering rule.

The first traffic steering rule indicates to send, to the second UPF network element, a packet that is for the campus DN and that is sent by the terminal device. The UPF &GW-U network element (namely, the first UPF network element) may establish an uplink tunnel to the second UPF network element based on the second tunnel information, and may steer, according to the first traffic steering rule, a packet that is for the campus DN and that is from the terminal device and a packet that is for the internet and that is from the terminal device. For example, the packet that is for the campus DN and that is from the terminal device is sent to the second UPF network element through the uplink tunnel established between the second UPF network element and the UPF&GW-U network element, so that the second UPF network element forwards the packet to the campus DN; and the packet that is for the internet and that is from the terminal device is sent to the internet.

In addition, the UPF&GW-U network element (namely, the first UPF network element) may further construct a GTPU packet that carries an IP address allocated to the terminal device by the SMF&PGW-C network element (namely, the first SMF network element), the UPF&GW-U network element (namely, the first UPF network element), or the like, and send the GTPU packet to the second UPF network element. The second UPF network element associates the IP address of the terminal device with a dedicated IP address of the terminal device in the campus DN, to perform address translation and the like on a packet transmitted between the campus DN and the terminal device.

In addition, it should be understood that, when the terminal device performs access at the visited location (the roaming location) over 4G, the UPF&PGW-U network element may further perform 4G and 5G packet format conversion on a packet transmitted between the first dedicated DN and the terminal device, to support transmission of the packet between the first dedicated DN and the terminal device.

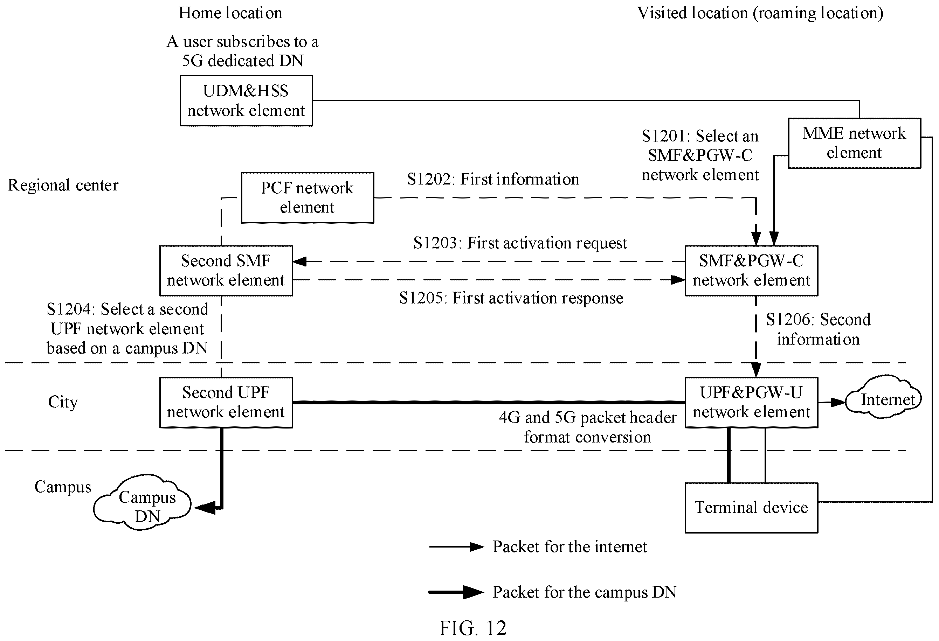

For an implementation of the communication method shown in FIG. 12, refer to the descriptions of the communication method shown in FIG. 5 or FIG. 9. Details are not described again.

It may be understood that, to implement the functions in the foregoing embodiments, the first session management network element, the second session management network element, the first user plane function network element, and the second user plane function network element include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

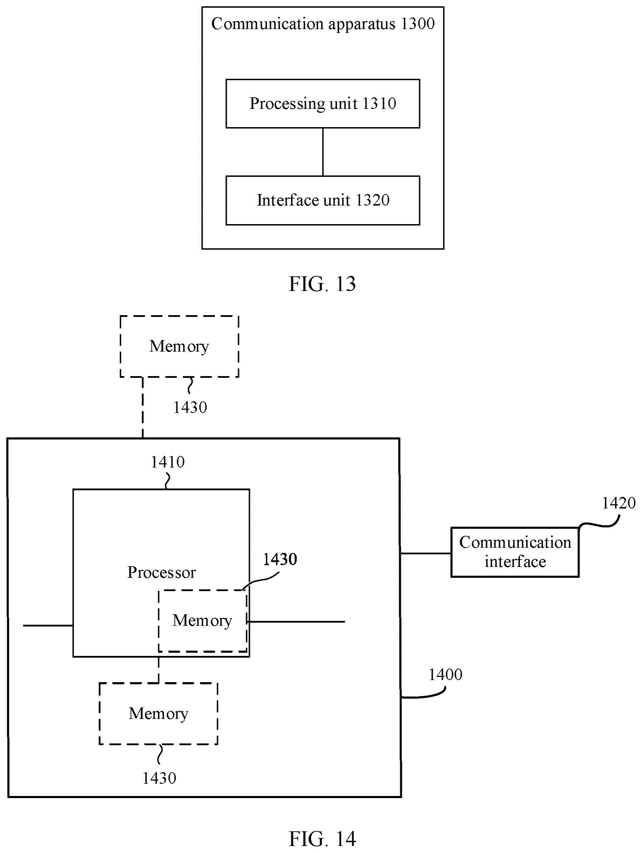

FIG. 13 and FIG. 14 are diagrams of structures of possible communication apparatuses according to embodiments of this application. These communication apparatuses may be configured to implement a function of the first session management network element, the second session management network element, the first user plane function network element, or the second user plane function network element in the foregoing method embodiments, and therefore can also implement beneficial effects of the foregoing method embodiments.

As shown in FIG. 13, the communication apparatus 1300 includes a processing unit 1310 and an interface unit 1320. The interface unit 1320 may alternatively be a transceiver unit or an input/output interface. The communication apparatus 1300 may be configured to implement a function of the first communication apparatus or the second communication apparatus in the method embodiment shown in FIG. 5, FIG. 7, FIG. 8, FIG. 9, FIG. 10, FIG. 11, or FIG. 12.

When the communication apparatus 1300 is configured to implement the function of the first session management network element in the method embodiment shown in FIG. 5, FIG. 7, FIG. 8, FIG. 9, FIG. 10, FIG. 11, or FIG. 12,
the interface unit 1320 is configured to: receive first information from a policy control network element, where the first information includes an identifier of a first dedicated data network to which a terminal device subscribes, and the communication apparatus is a session management network element at a visited location of the terminal device; send a first request to a second session management network element, where the first request includes the identifier of the first dedicated data network, and the second session management network element is a session management network element that supports the first dedicated data network; and receive a first response from the second session management network element, where the first response includes second tunnel information of a second user plane function network element, and the second user plane function network element is a user plane function network element selected by the second session management network element based on the first dedicated data network;
the processing unit 1310 is configured to determine a first traffic steering rule; and the interface unit 1320 is further configured to send second information to a first user plane function network element, where the second information includes the second tunnel information and the first traffic steering rule, the first traffic steering rule indicates the first user plane function network element to send, to the second user plane function network element, a packet that is for the first dedicated data network and that is sent by the terminal device, and the first user plane function network element is a user plane function network element selected for a general data network to which the terminal device subscribes.

In a possible design, the first information further includes an internet protocol IP address list and/or a domain name list that correspond/corresponds to the first dedicated data network; and the first traffic steering rule includes the IP address list and/or the domain name list.

In a possible design, the processing unit 1310 is further configured to obtain, via a network repository function network element, information about the second session management network element that supports the first dedicated data network.

In a possible design, the first request further includes first tunnel information of the first user plane function network element.

In a possible design, the first request further includes an IP address of the terminal device.

In a possible design, the interface unit 1320 is further configured to: when the terminal device is located in a service area of the second user plane function network element, send fourth information to the second user plane function network element, where the fourth information includes the first tunnel information of the first user plane function network element and a second traffic steering rule, and the second traffic steering rule indicates the second user plane function network element to send, to the first user plane function network element, a packet that is not for the first dedicated data network and that is sent by the terminal device; and the processing unit 1310 is further configured to: before the interface unit 1320 sends the second information to the first user plane function network element, determine that the terminal device moves out of the service area of the second user plane function network element.

In a possible design, the second traffic steering rule includes the IP address list and/or the domain name list that correspond/corresponds to the first dedicated data network.

In a possible design, the interface unit 1320 is further configured to send the first tunnel information of the first user plane function network element and a third traffic steering rule to a third user plane function network element, where the third traffic steering rule indicates the third user plane function network element to send, to the first user plane function network element, a packet that is not for a second dedicated data network and that is sent by the terminal device, and the third user plane function network element is a user plane function network element selected by the processing unit 1310 based on the second dedicated data network.

In a possible design, the third traffic steering rule includes an IP address list and/or a domain name list that correspond/corresponds to the second dedicated data network.

In a possible design, when the terminal device performs access at the visited location over 4G, the first session management function network element is a session management and packet data network gateway control plane function converged network element at the visited location, and the first user plane function network element is a user plane function and packet data network gateway data plane function converged network element at the visited location.

When the communication apparatus 1300 is configured to implement the function of the first user plane function network element in the method embodiment shown in FIG. 5, FIG. 7, FIG. 8, FIG. 9, FIG. 10, FIG. 11, or FIG. 12,
the interface unit 1320 is configured to receive second tunnel information and a first traffic steering rule from a first session management network element, where the first session management network element is a session management network element at a visited location of a terminal device, the communication apparatus is a user plane function network element selected for a general data network to which the terminal device subscribes, the second tunnel information is tunnel information of a second user plane function network element selected for a first dedicated data network to which the terminal device subscribes, and the first traffic steering rule indicates to send, to the second user plane function network element, a packet that is for the first dedicated data network and that is sent by the terminal device; and
the processing unit 1310 is configured to establish an uplink tunnel to the second user plane function network element based on the second tunnel information, where the uplink tunnel is used to transmit a packet sent by the interface unit 1320 to the second user plane function network element.

In a possible design, the first traffic steering rule includes an internet protocol IP address list and/or a domain name list that correspond/corresponds to the first dedicated data network.

In a possible design, the interface unit 1320 is further configured to: send a first packet from the terminal device to the second user plane function network element through the uplink tunnel, where a first domain name carried in the first packet belongs to the domain name list; and receive a second packet from the second user plane function network element, where the second packet is a response packet for the first packet; and the processing unit 1310 is further configured to associate a source IP address of the second packet with the first domain name.

In a possible design, the interface unit 1320 is further configured to send a third packet to the second user plane function network element, where the third packet includes an IP address of the terminal device.

In a possible design, when the terminal device performs access at the visited location over 4G, the first session management function network element is a session management and packet data network gateway control plane function converged network element at the visited location, and the first user plane function network element is a user plane function and packet data network gateway data plane function converged network element at the visited location.

In a possible design, the processing unit 1310 is further configured to perform 4G and 5G packet header format conversion on a packet transmitted between the first dedicated data network and the terminal device.

When the communication apparatus 1300 is configured to implement the function of the second session management network element in the method embodiment shown in FIG. 5, FIG. 7, FIG. 8, FIG. 9, FIG. 10, FIG. 11, or FIG. 12,
the interface unit 1320 is configured to receive a first request from a first session management network element, where the first request includes an identifier of a first dedicated data network to which a terminal device subscribes, the first session management network element is a session management network element at a visited location of the terminal device, and the communication apparatus is a session management network element that supports the first dedicated data network; the processing unit 1310 is configured to determine a first response, where the first response includes second tunnel information of a second user plane function network element, and the second user plane function network element is a user plane function network element selected by the processing unit 1310 based on the first dedicated data network; and the interface unit 1320 is further configured to send the first response to the first session management network element.

In a possible design, the first request further includes first tunnel information of a first user plane function network element; and the interface unit 1320 is further configured to send third information to the second user plane function network element, where the third information includes the first tunnel information.

In a possible design, the first request further includes an internet protocol IP address of the terminal device, and the third information further includes the IP address of the terminal device.

In a possible design, the third information further includes a dedicated IP address of the terminal device in the first dedicated data network.

In a possible design, the interface unit 1320 is further configured to obtain the dedicated IP address from a user data management network element, or obtain the dedicated IP address from a server corresponding to the first dedicated data network.

When the communication apparatus 1300 is configured to implement the function of the second user plane function network element in the method embodiment shown in FIG. 5, FIG. 7, FIG. 8, FIG. 9, FIG. 10, FIG. 11, or FIG. 12,
the interface unit 1320 is configured to receive a third packet from a first user plane function network element, where the third packet includes an internet protocol IP address of a terminal device, the first user plane function network element is a user plane function network element selected for a general data network to which the terminal device subscribes, and the communication apparatus is a user plane function network element selected for a first dedicated data network to which the terminal device subscribes; and
the processing unit 1310 is configured to associate the IP address of the terminal device with a dedicated IP address of the terminal device in the first dedicated data network, where an association relationship between the IP address of the terminal device and the dedicated IP address is used to perform address translation on a packet transmitted between the first dedicated data network and the terminal device.

In a possible design, the interface unit 1320 is further configured to receive third information from a second session management network element, where the third information includes first tunnel information, the first tunnel identifier is a tunnel identifier of the first user plane function network element, and the second session management network element is a session management network element that supports the first dedicated data network; and
the processing unit 1310 is further configured to establish a downlink tunnel to the first user plane function network element based on the first tunnel information, where the downlink tunnel is used to transmit a packet sent by the interface unit 1320 to the first user plane function network element.

In a possible design, the third information further includes the dedicated IP address of the terminal device in the first dedicated data network.

When the communication apparatus 1300 is configured to implement the function of the second user plane function network element in the method embodiment shown in FIG. 5, FIG. 7, FIG. 8, FIG. 9, FIG. 10, FIG. 11, or FIG. 12,
the interface unit 1320 is configured to receive third information from a second session management network element, where the third information includes first tunnel information and an internet protocol IP address of a terminal device, the first tunnel identifier is a tunnel identifier of a first user plane function network element, the first user plane function network element is a user plane function network element selected for a general data network to which the terminal device subscribes, the communication apparatus is a user plane function network element selected for a first dedicated data network to which the terminal device subscribes, and the second session management network element is a session management network element that supports the first dedicated data network; and
the processing unit 1310 is configured to: establish a downlink tunnel to the first user plane function network element based on the first tunnel information, where the downlink tunnel is used to transmit a packet sent by the interface unit 1320 to the first user plane function network element; and associate the IP address of the terminal device with a dedicated IP address of the terminal device in the first dedicated data network, where an association relationship between the IP address of the terminal device and the dedicated IP address is used to perform address translation on a packet transmitted between the first dedicated data network and the terminal device.

In a possible design, the third information further includes the dedicated IP address of the terminal device in the first dedicated data network.

As shown in FIG. 14, this application further provides a communication apparatus 1400, including a processor 1410, and may further include a communication interface 1420. The processor 1410 and the communication interface 1420 are coupled to each other. It may be understood that the communication interface 1420 may be a transceiver, an input/output interface, an input interface, an output interface, an interface circuit, or the like. Optionally, the communication apparatus 1400 may further include a memory 1430, configured to: store instructions to be executed by the processor 1410, store input data needed by the processor 1410 to run instructions, or store data generated after the processor 1410 runs instructions. The memory 1430 may be a physically independent unit, or may be coupled to the processor 1410, or the processor 1410 includes the memory 1430.

When the communication apparatus 1400 is configured to implement the method shown in FIG. 5, FIG. 7, FIG. 8, FIG. 9, FIG. 10, FIG. 11, or FIG. 12, the processor 1410 may be configured to implement a function of the processing unit 1310, and the communication interface 1420 may be configured to implement a function of the interface unit 1320.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in a network device or a terminal device as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or transmitted from one computer-readable storage medium to another computer-readable storage medium. For example, the computer programs or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

In addition, it should be understood that, in embodiments of this application, the word "for example" is used to represent giving an example, an illustration, or a description. Any embodiment or design solution described as an "example" in this application should not be explained as being more preferred or having more advantages than another embodiment or design solution. Exactly, the word "example" is used to present a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving, by a first session management network element, first information from a policy control network element, wherein the first information comprises an identifier of a first dedicated data network to which a terminal device subscribes, and the first session management network element is a session management network element at a visited location of the terminal device;
sending, by the first session management network element, a first request to a second session management network element, wherein the first request comprises the identifier of the first dedicated data network, and the second session management network element is a session management network element that supports the first dedicated data network;
receiving, by the first session management network element, a first response from the second session management network element, wherein the first response comprises second tunnel information of a second user plane function network element, and the second user plane function network element is a user plane function network element selected by the second session management network element based on the first dedicated data network; and
sending, by the first session management network element, second information to a first user plane function network element, wherein the second information comprises the second tunnel information and a first traffic steering rule, the first traffic steering rule indicates the first user plane function network element to send, to the second user plane function network element, a packet that is for the first dedicated data network and that is sent by the terminal device, and the first user plane function network element is a user plane function network element selected for a general data network to which the terminal device subscribes.

2. The method according to claim 1, wherein the first information further comprises an internet protocol IP address list and/or a domain name list that correspond/corresponds to the first dedicated data network; and
the first traffic steering rule comprises the IP address list and/or the domain name list.

3. The method according to claim 1 or 2, wherein the method further comprises:
obtaining, by the first session management network element via a network repository function network element, information about the second session management network element that supports the first dedicated data network.

4. The method according to any one of claims 1 to 3, wherein the first request further comprises first tunnel information of the first user plane function network element.

5. The method according to claim 4, wherein the first request further comprises an IP address of the terminal device.

6. The method according to any one of claims 1 to 5, wherein the method further comprises:
when the terminal device is located in a service area of the second user plane function network element, sending, by the first session management network element, fourth information to the second user plane function network element, wherein the fourth information comprises the first tunnel information of the first user plane function network element and a second traffic steering rule, and the second traffic steering rule indicates the second user plane function network element to send, to the first user plane function network element, a packet that is not for the first dedicated data network and that is sent by the terminal device; and
before sending, by the first session management network element, the second information to the first user plane function network element, the method further comprises:
determining, by the first session management network element, that the terminal device moves out of the service area of the second user plane function network element.

7. The method according to claim 6, wherein the second traffic steering rule comprises the IP address list and/or the domain name list that correspond/corresponds to the first dedicated data network.

8. The method according to any one of claims 1 to 5, wherein the method further comprises:
sending, by the first session management network element, the first tunnel information of the first user plane function network element and a third traffic steering rule to a third user plane function network element, wherein the third traffic steering rule indicates the third user plane function network element to send, to the first user plane function network element, a packet that is not for a second dedicated data network and that is sent by the terminal device, and the third user plane function network element is a user plane function network element selected by the first session management network element based on the second dedicated data network.

9. The method according to claim 8, wherein the third traffic steering rule comprises an IP address list and/or a domain name list that correspond/corresponds to the second dedicated data network.

10. The method according to any one of claims 1 to 9, wherein when the terminal device performs access at the visited location over 4G, the first session management network element is a session management and packet data network gateway control plane function converged network element at the visited location, and the first user plane function network element is a user plane function and packet data network gateway data plane function converged network element at the visited location.

11. A communication method, comprising:
receiving, by a first user plane function network element, second tunnel information and a first traffic steering rule from a first session management network element, wherein the first session management network element is a session management network element at a visited location of a terminal device, the first user plane function network element is a user plane function network element selected for a general data network to which the terminal device subscribes, the second tunnel information is tunnel information of a second user plane function network element selected for a first dedicated data network to which the terminal device subscribes, and the first traffic steering rule indicates to send, to the second user plane function network element, a packet that is for the first dedicated data network and that is sent by the terminal device; and
establishing, by the first user plane function network element, an uplink tunnel to the second user plane function network element based on the second tunnel information, wherein the uplink tunnel is used to transmit a packet sent by the first user plane function network element to the second user plane function network element.

12. The method according to claim 11, wherein the first traffic steering rule comprises an internet protocol IP address list and/or a domain name list that correspond/corresponds to the first dedicated data network.

13. The method according to claim 12, wherein when the first traffic steering rule comprises the domain name list corresponding to the first dedicated data network, the method further comprises:
sending, by the first user plane function network element, a first packet from the terminal device to the second user plane function network element through the uplink tunnel, wherein a first domain name carried in the first packet belongs to the domain name list;
receiving, by the first user plane function network element, a second packet from the second user plane function network element, wherein the second packet is a response packet for the first packet; and
associating, by the first user plane function network element, a source IP address of the second packet with the first domain name.

14. The method according to any one of claims 11 to 13, the method further comprises:
sending, by the first user plane function network element, a third packet to the second user plane function network element, wherein the third packet comprises an IP address of the terminal device.

15. The method according to any one of claims 11 to 14, wherein when the terminal device performs access at the visited location over 4G, the first session management function network element is a session management and packet data network gateway control plane function converged network element at the visited location, and the first user plane function network element is a user plane function and packet data network gateway data plane function converged network element at the visited location.

16. The method according to claim 15, wherein the method further comprises:
performing, by the first user plane function network element, 4G and 5G packet format conversion on a packet transmitted between the first dedicated data network and the terminal device.

17. A communication method, comprising:
receiving, by a second session management network element, a first request from a first session management network element, wherein the first request comprises an identifier of a first dedicated data network to which a terminal device subscribes, the first session management network element is a session management network element at a visited location of the terminal device, and the second session management network element is a session management network element that supports the first dedicated data network; and
sending, by the second session management network element, a first response to the first session management network element, wherein the first response comprises second tunnel information of a second user plane function network element, and the second user plane function network element is a user plane function network element selected by the second session management network element based on the first dedicated data network.

18. The method according to claim 17, wherein the first request further comprises first tunnel information of the first user plane function network element; and the method further comprises:
sending, by the second session management network element, third information to the second user plane function network element, wherein the third information comprises the first tunnel information.

19. The method according to claim 18, wherein the first request further comprises an internet protocol IP address of the terminal device, and the third information further comprises the IP address of the terminal device.

20. The method according to claim 18 or 19, wherein the third information further comprises a dedicated IP address of the terminal device in the first dedicated data network.

21. The method according to claim 20, wherein the method further comprises:
obtaining, by the second session management network element, the dedicated IP address from a user data management network element, or obtaining the dedicated IP address from a server corresponding to the first dedicated data network.

22. A communication method, comprising:
receiving, by a second user plane function network element, a third packet from a first user plane function network element, wherein the third packet comprises an internet protocol IP address of a terminal device, the first user plane function network element is a user plane function network element selected for a general data network to which the terminal device subscribes, and the second user plane function network element is a user plane function network element selected for a first dedicated data network to which the terminal device subscribes; and
associating, by the second user plane function network element, the IP address of the terminal device with a dedicated IP address of the terminal device in the first dedicated data network, wherein an association relationship between the IP address of the terminal device and the dedicated IP address is used to perform address translation on a packet transmitted between the first dedicated data network and the terminal device.

23. The method according to claim 22, wherein the method further comprises:
receiving, by the second user plane function network element, third information from a second session management network element, wherein the third information comprises first tunnel information, the first tunnel identifier is a tunnel identifier of the first user plane function network element, and the second session management network element is a session management network element that supports the first dedicated data network; and
establishing, by the second user plane function network element, a downlink tunnel to the first user plane function network element based on the first tunnel information, wherein the downlink tunnel is used to transmit a packet sent by the second user plane function network element to the first user plane function network element.

24. The method according to claim 23, wherein the third information further comprises the dedicated IP address of the terminal device in the first dedicated data network.

25. A communication method, comprising:
receiving, by a second user plane function network element, third information from a second session management network element, wherein the third information comprises first tunnel information and an internet protocol IP address of a terminal device, the first tunnel identifier is a tunnel identifier of a first user plane function network element, the first user plane function network element is a user plane function network element selected for a general data network to which the terminal device subscribes, the second user plane function network element is a user plane function network element selected for a first dedicated data network to which the terminal device subscribes, and the second session management network element is a session management network element that supports the first dedicated data network; and
establishing, by the second user plane function network element, a downlink tunnel to the first user plane function network element based on the first tunnel information, wherein the downlink tunnel is used to transmit a packet sent by the second user plane function network element to the first user plane function network element; and associating the IP address of the terminal device with a dedicated IP address of the terminal device in the first dedicated data network, wherein an association relationship between the IP address of the terminal device and the dedicated IP address is used to perform address translation on a packet transmitted between the first dedicated data network and the terminal device.

26. The method according to claim 25, wherein the third information further comprises the dedicated IP address of the terminal device in the first dedicated data network.

27. A communication apparatus, comprising an interface unit and a processing unit, wherein
the interface unit is configured to receive and send data; and
the processing unit is configured to perform, via the interface unit, the method according to any one of claims 1 to 26.

28. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement, via a logic circuit or by executing instructions, the method according to any one of claims 1 to 26.

29. A computer program product, comprising a computer program or instructions, wherein when the computer program or the instructions are executed by a processor, the method according to any one of claims 1 to 26 is implemented.

30. A chip system, wherein the chip system comprises a processor, the processor is configured to be coupled to a memory, the memory is configured to store a program or instructions, and when the program or the instructions are executed by the processor, the method according to any one of claims 1 to 26 is implemented.

31. A computer-readable storage medium, wherein the storage medium stores a computer program or instructions, and when the computer program or the instructions are executed by a processor, the method according to any one of claims 1 to 26 is implemented.

32. A communication system, wherein the communication system comprises a first session management network element and a first user plane function network element, the first session management network element is configured to perform the method according to any one of claims 1 to 10, and the first user plane function network element is configured to perform the method according to any one of claims 11 to 16.

33. The communication system according to claim 32, further comprising a second session management network element, wherein the second session management network element is configured to perform the method according to any one of claims 17 to 21.

34. The communication system according to claim 32 or 33, further comprising a second user plane function network element, wherein the second user plane function network element is configured to perform the method according to any one of claims 22 to 26.
